# EUROPEAN PATENT SPECIFICATION

(11) **EP 4 150 144 B1**
(45) Date of publication and mention of the grant of the patent: **02.04.2025**
(21) Application number: 21805257.9
(22) Date of filing: 25.02.2021
(51) Int. Cl.: A41D 13/11, B32B 5/02, B32B 5/26, B32B 7/02, D04H 1/4374, D04H 1/54, D04H 1/728, D04H 1/74

(54) **PRODUCTION METHOD FOR A HIGH PERFORMANCE FILTRATION LAYER**
HERSTELLUNGSVERFAHREN FÜR HOCHLEISTUNGSFILTERSCHICHT
PROCÉDÉ DE PRODUCTION DE COUCHES DE FILTRATION HAUTE PERFORMANCE

(30) Priority: 12.05.2020 TR 202007418
(43) Date of publication of application: 22.03.2023
(73) Proprietor: Telasis Tekstil Urunleri San. ve Tic. A.S., 34522 Esenyurt/Istanbul (TR)
(72) Inventor: SISMAN, Ali Zafer, 34522 Esenyurt/Istanbul (TR); KAYA, Zeynep, 34522 Esenyurt/Istanbul (TR); USTUN AYDIN, Huner, 34522 Esenyurt/Istanbul (TR)
(74) Representative: Demirkiran, Hasan
(86) International application number: PCT/TR2021/050173
(87) International publication number: WO 2021/230839

(56) References cited:
- WO-A1-00/29658
- WO-A1-2011/133394
- WO-A1-2012/006300
- WO-A1-2016/128844
- WO-A1-92/11405
- US-A- 5 494 736
- US-A1- 2003 194 937

## Description

### Field of Invention and Technical Field

This invention relates to the production of filtration layer that can be used in many fields, especially surgical masks. The aforementioned filtration layers are thermobond non-woven layer and layers formed by supporting it with electrospinning method. Thermobond nonwoven layer is obtained as a result of a process that includes fiber dispersion, fiber feeding, carding and bonding.

### State of the Art

Throughout history, humanity have had to struggle with various epidemics. Some of these epidemics led to millions of death, destroyed almost whole the cities and changed the course of history. Communication between people has become more accessible with the development of technology in today's world. This situation caused the virus which occurred in a region to spread more rapidly. While an epidemic took months to spread in the past, today, it has become capable of affecting millions of people in a few days.

Even if they do not approach the number of deaths caused by the old epidemics, Swine Flu, MERS and SARS are prominent pandemics worldwide in the last 20 years. For the first time, as a result of research conducted in a group of patients who developed respiratory symptoms (fever, cough, shortness of breath) in Wuhan sub-provincial city, China, in late December 2019, COVID-19 was defined in January 2020. The epidemic was initially detected in those in the sea products and livestock market in this area. Then by transmitting from person to person, it has spread to other cities in Hubei province, especially Wuhan, and other provinces of the People's Republic of China and other countries of the world.

Today, with the COVID-19 pandemic becoming global, people are worried about their health and safety and they are fighting this pandemic by taking various measures. The use of masks and gloves is one of them. The mask is a personal protective equipment that protects the person against dust and particles of physical, chemical and biological agents.

Surgical masks are also known as procedure mask, medical mask, or face mask and they were originally designed to be used by healthcare professionals during surgery and patient care to prevent bacteria transmitted through aerosol and liquid droplets in the user's mouth and nose. However, during the ongoing coronavirus pandemic, people other than healthcare professionals also benefit from these masks.

These surgical masks generally consist of a three-layer structure. Non-woven fabrics produced with the technology of SMS, SS, SSS etc. (S stands for spunbond, M stands for meltblown) are joined by adhesive bonding, ultrasonic welding or lockstitch method. Meltblown (obtained as a result of the melt blowing process) layer filters the entrance and exit of microorganisms.

COVID-19 Pandemic has brought along an increase in the demand for surgical masks and people other than healthcare professionals have also started to use masks widely. The fact that the raw materials of these masks are limited as spunbond and/or meltblown creates a problem in terms of supply and there is a lack of capacity. Insufficient capacity, high cost, rigid structure of the products, being difficult to shape and lack of volume are of the problems in the state of the art. Especially the meltblown layer has a challenging production process and a sensitive structure.

In the state of the art, various patent studies on surgical masks have been found. One of them is the US patent numbered US2007044801A1 with the title "Germicidal face mask". In this patent, a mask that will reduce the amount of bacteria and germs the user is exposed to is mentioned. The outer layer of the mask is processed with an antiseptic substance. It is stated that the processed layer can be a non-woven fabric such as spunbond, meltblown or their lamination.

The European patent numbered EP0391725A1 with the title "Method for making an electrostatically charged face mask" is another patent on the subject. Masks for medical and surgical uses are considered. The filtration medium consists of two electrostatically charged layers. It can retain bacteria and particles up to 0.1 micron.

The US patent numbered US2012137885A1 with the title "Nanofibre membrane layer for water and air filtration" mentions a membrane layer containing nanofibres to be used in water and air filtration. Membrane layer consists of polymeric nanofibers with an average diameter of 50-600 nm.

The US patent numbered US5494736A with the title "High elongation thermally bonded carded nonwoven fabrics" claims a process for producing high elongation, thermally bonded carded nonwoven fabrics that are suitable for use in absorbent products such as diapers and pads. It describes the use of high elongation polyolefin staple fibers and carding techniques to achieve significant elongation and tensile strength. The process avoids the need for elastomeric materials, thereby addressing cost and processing challenges associated with traditional methods. The resulting fabrics, with a basis weight of 20-30 grams per square yard, are reported to have high tensile strength and excellent elongation, offering both functional and aesthetic benefits.

The international patent numbered WO9211405A1 with the title "Methods of forming fibrous filtration face masks" describes a face mask invention with a shaping layer designed to minimize surface fuzz. This layer uses nonwoven, thermally bonded fibers, including at least 40% thermally bondable fibers and 10% bicomponent fibers. The mask is manufactured using cold molding and pressing to shape and reduce surface fuzz while maintaining effective filtration.

It has been seen that studies encountered in the state of the art are insufficient for existing problems such as meltblown capacity insufficiency, cost, and difficulty in application in the final product. Except for spunbond and meltblown, there is a need for products that can be produced using different raw materials, have ease of application, low cost and high bacterial retention.

### Technical Problems which the Invention Aims to Solve

The purpose of filtration layers of the present invention and production process is to produce filter layers by supporting thermobond (thermally bonded) nonwovens with different structures such as bicomponent, viscose, trilobal fibers and electrospinning methods. With the process developed, filtration layers are created as an alternative to meltblown and spunbond products.

An advantage of process of the present invention is the ability to produce an effective nonwoven mask fabric that provides ease of application thanks to the combination of staple fibers with different properties with thermobond (thermally bonded) production technology.

Another advantage of the process of the present invention is that it can be used in combination with an electrospinning process. In this way, with nano-sized filaments, the BFE (bacterial filtration efficiency) value will be increased and light, soft and effective layers will be obtained.

In one embodiment of the present invention filtration efficiency is increased by using fibers with different cross-section structures such as trilobal.

Production speed, capacity, ease of application, ease of working with different raw materials, ease of stitching, combination of special fibers with a bulky structure and increase in functional properties are the advantages of the invention according to the state of the art and constitute other advantages.

The present invention relates to a production method for a nonwoven material suitable for use as a filtration layer, as defined in claim 1.

In order to better understand the filter layers produced according to the present invention and the production process, the figures below will be used.

### Description of Figures

Figure-1: It is the cross-sectional view of the surgical mask formed with the filter layers of the present invention.
Figure-2: It is a representative view of the mechanism where thermobond non-woven production takes place with the process of the present invention.
Figure-3: It is a representative view of the mechanism where the thermobond non-woven layer produced as a result of the process of the present invention is supported by electrospinning method.
Figure-4: This is the flow chart showing the process steps of thermobond non-woven production with the process of the present invention.

### Reference Numbers of Part, Section and Flow to Help Explaining the Invention

1- Surgical mask
   1a- Outer texture
   1b- Medium filter texture
   1c- Inner texture
2- Thermobond nonwoven production setup
   2a-Fiber opening chamber
   2b-Picker, mixer cylinders
   2c-Fiber warehouse
   2d-Feeding unit
   2e-Conveyor belt
   2f-Feed rollers
   2g-Weighing conveyor belt
   2h-Cylinder
   2i-Drum
   2j- Carded web
   2k-Embossing calender
   2l- Smooth calender
   2m- Carded thermobond nonwoven
3- Electrospinning setup
   3a- Injector pump
   3b- Solution mixture
   3c- Nozzle
   3d- Distance
   3e- High voltage generator
   3f- Opening roller
   3g- Winder roller

### Process Flow Chart to Help Explaining the Invention

100- Fiber opening stage
110- Fiber feeding stage
120- Carding Stage
130- Bonding stage

### Detailed Description of the Invention

With the filter layers of the present invention, basically, it is aimed to create an alternative product for the meltblown filter layer and thus to avoid the problems existing in the state of the art related to meltblown. Based on this main purpose, the electrospinning method is also used and with nanosized filaments, light, soft and effective alternative layers with high bacterial filtration efficiency (BFE) are obtained.

By combining the filter layers of the present invention, preferably, a three-layer surgical mask (1) can be formed. Although the increase in the number of layers increases the protection, it will decrease the comfort. It can be single or multi-layered. By combining the filtration layers of the present invention, the section view of a three-layer mask obtained is given in Figure-1.

Three layers defined as outer texture (1a), medium filter texture (1b) and inner texture (1c) are generally formed by organizing staple synthetic, natural and regenerated, bicomponent and customized fibers with different cross section structures. The outer texture (1a) and inner texture (1c) consist of the thermobond non-woven layer, and the medium filter texture (1b) consists of a thermobond non-woven layer supported by nanofibers obtained as a result of electrospinning. Each layer of the said surgical mask (1) has a BFE value (bacterial filtration efficiency) in the range of 95-99%. Particle penetration value is in the range of 1-20%.

In Figure-2, there is a representative view of the setup where thermobond non-woven production takes place. In the thermobond non-woven production setup (2), in general, by blending staple synthetic, natural and regenerated, bicomponent and customized fibers with different cross section structures, non-woven is obtained by carding, dry laying and thermal bonding methods. When stepped as a process, it consists of the following stages and the flow chart of these stages is given in Figure-4.
- Fiber opening stage (100)
- Fiber feeding stage (110)
- Carding Stage (120)
- Bonding stage (130)

The thermobond non-woven obtained as a result of the process that is given in the flow chart in Figure-4 and performed in a representative setup as in Figure-2 is used in the outer texture (1a) and inner texture (1c) of the surgical mask (1).

Detailed explanation of the stages of the thermobond nonwoven production process are as follows.

### Fiber opening stage (100)

At this stage, in the fiber opening chamber (2a) in the form of a single or eight blend, staple synthetic, natural and regenerated bicomponent fibers and customized fibers with different cross-sectional structures are pre-opened, preferably mechanically, at rates in the range of 1-100%. Then it comes to picker, mixer cylinders (2b) and it is sent to the fiber warehouse (2c).

### Fiber feeding stage (110)

The fibers opened at this stage come to the fiber warehouse (2c) and then to the feeding unit (2d). Here, different types and structures of fibers are mixed in the desired blend by airing. By the conveyor belt (2e), the fibers are sent to the feeding rollers (2f) and then laid on the weighing conveyor belt (2g) for carding.

### Carding Stage (120)

At this stage, the fiber mixture, preferably in the range of 8g / m²- 100g / m², which comes with a balance conveyor belt (2f), is spread randomly by dispersing ±45⁰ in parallel and cross direction in a system consisting of cylinders (2h) and drums (2i) organized in different diameters, different speeds, different directions, different technical equipment and it is directed to the belt system with different number of transfer cylinders. Equipment features to perform carding of cylinders (2h) take values depending on variables such as structureinclination and placement of these equipment, rotation of the rollers, raw material fiber mixture, fiber denier-length values, and fiber morphological structure. Fiber properties should preferably be in the range of 0.5-15 denier and 30-80 mm lengths. Fibers can be synthetic fibers with mono or bicomponent components, polyester, polyamide, polypropylene etc., bicomponent synthetic fibers in polyethylene-polypropylene, polyester-copolyester etc. structures, different cross-section structures, synthetic fibers with different cross-section structures such as round-hollow-trilobal, and natural and regenerated fibers of viscose, cotton, etc. The selection of these fibers, their blending and mixing ratios are decisive in the parameters regarding the equipment properties of the cylinders (2h).

### Bonding stage (130)

At this stage, the carded web (2j) obtained as a result of the carding stage (120) is organized and assembled as a single texture on the transfer belt. The carded web (2j) is transferred between the oil-heated calenders. It is passed between hot smooth calender (2l) and hot embossing calender (2k) at temperature, pressure and speed values suitable for the fiber mixture. The carded web (2j) is calendered with temperature and pressure and fixed by means of thermal welding points and the carded thermobond non-woven (2m) is formed.

The parameters vary according to the raw materials, with the temperature values in the range of 35-500 C⁰, the temperature difference between the calenders being ± 20 C⁰ and the embossing calender (2k) thermal bonding area being in the range of 5-40%.

Details on obtaining the thermobond non-woven layer have been given above as a result of the steps of the fiber opening stage (100), the fiber feeding stage (110), the carding stage (120) and the bonding stage (130). In this process, it should be known that the visual in Figure-2 is representative, the process can be completed with different equipment that will serve the same function or manually, and the expressions such as machine, unit, etc. in the descriptions and images are not binding. The thermobond non-woven obtained as a result of this process is used directly in the outer tissue (1a) and inner tissue (1c) of the surgical mask (1).

As a result of the process of the present invention, a layer with a bacterial filtration efficiency (BFE) in the range of 95-99% is obtained. The high bacterial retention is the original part of the invention. Process parameters are very important to get effective results. In particular, the bonding stage (130) can be considered critical. At this stage, the carded web (2j) passes through the calenders and the thermal bonding process takes place.

The fiber scale that can be used in the fiber opening stage (100), which is the first stage of the process of the present invention, is quite wide. However, in the state of the art, the fibers that can be processed are limited with spunbonds and meltblowns. The ability to carry out the process with various fibers provides filtration layers with different functional properties.

Medium filter texture (1b) of the surgical mask (1) is supported by nanofibers unlike the outer texture (1a) and inner texture (1c). The mentioned nanofibers are formed as a result of the electrospinning process. Electrospinning is a method applied by drawing the polymer from a specially prepared solution using an electric field. With this method, one-dimensional nanostructures can be obtained. A representative view of a setup regarding the strengthening of the thermobond non-woven layer obtained as a result of the inventive process by electrospinning is given in Figure-3. As seen in Figure-3, integration of the thermobond non-woven layer obtained as a result of the process of the present invention into the electrospinning process is provided by a thermobond non-woven cylinder placed in the electrospinning process. Nanofibers obtained by electrospinning method are transferred to the thermobond non-woven layer in the opening roller (3f) and the thermobond non-woven layer reinforced with nanofibers is wrapped with a separate winder roller (3g).

In the electrospinning setup (3) in Figure-3, a chemical solution is first formed from the polymer and natural extracts and taken into the injector. For electrospinning synthetic fibers, it is preferred that the concentration percentage is in the range of 1.5-7.5%. The conductivity of the solution mixture (3b) should preferably be in the range of 1.5 - 5.5 µS / cm and the viscosity preferably in the range 5-250 cp. The solution mixture (3b) in the injector is given from the nozzle (3c) with the help of the injector pump (3a) and is exposed to high voltage by the high voltage generator (3e). The speed of the injector pump (3a), the speed of the mixer is preferably in the range of 10-500 rpm. As a result of high voltage, nanothreads with dimensions between 50-300 nm begin to form. With high voltage electro spinning method on the nonwoven layer in the opening roller (3f) placed after the distance (3d), the polymerized filaments are transferred, wrapped with the help of a winder roller (3g) and the process is completed. In the electrospinning process, filament spinning of any synthetic, polyethylene, polypropylene, PVC, polyurethane or ester group raw materials suitable for polymerization can be performed. The appearance, touching, usefulness, bacterial filtration feature, biocharging properties and breathability are increased with natural extracts. In the electrospinning process, the distance (3d) is preferably changed between 10 cm and 2.5 m to shape the nanofilament structure.

In the preferred structuring, only the medium filter texture (1b) is supported by the electrospinning process and nanofibers. However, it is possible to use thermobond nonwoven supported with nanofibers in other layers. The layers are combined with methods such as ultrasonic or lockstitch machines in the state of the art.

### Application of the Invention to Industry

The filtration layers of the present invention can be used in many areas, especially surgical masks. It is possible to use in water-air-chemical filtration products and oil and petroleum filtration products. In addition, medical products and media filtration products, food and electronic filtration products, and air conditioning filtration products are other areas where the invention can be used.

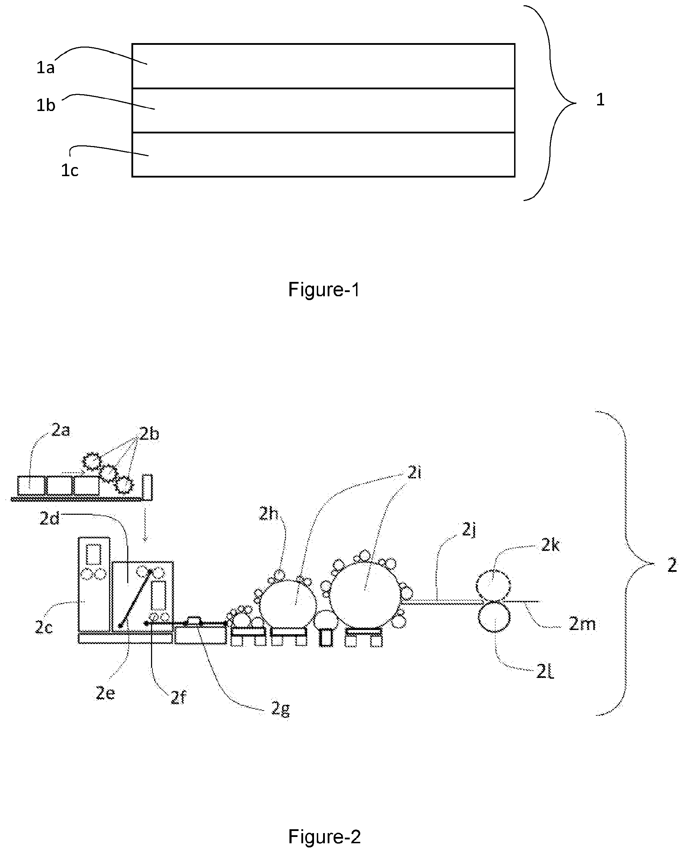

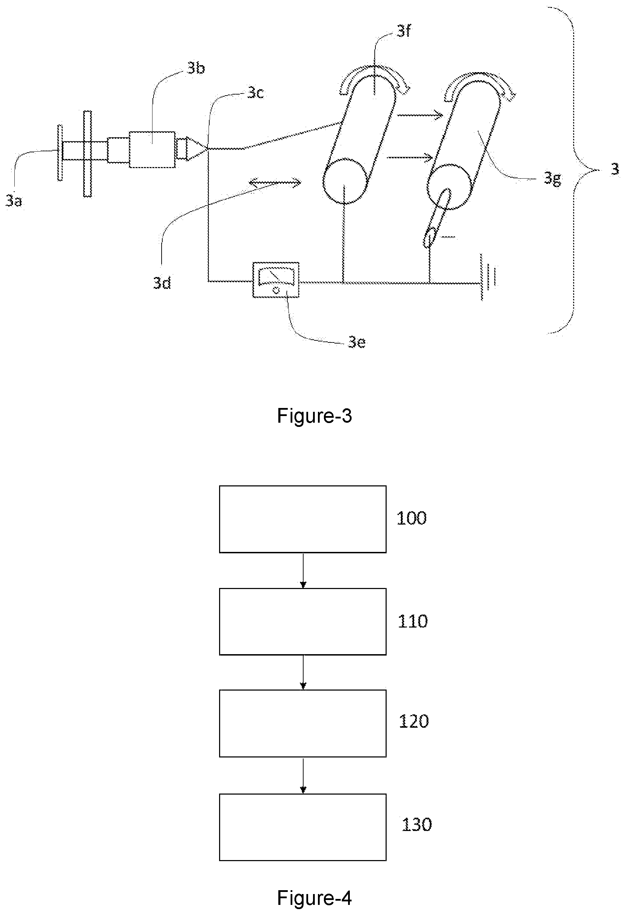

## Claims

1. A production method for a nonwoven material suitable for use as a filtration layer **characterized by** passing a fiber mixture through the following stages:
fiber opening stage (100), fiber feeding stage (110), carding stage (120)
and
bonding stage (130),wherein in the bonding stage (130), the carded web (2j) obtained from the carding stage (120) is delivered between internally oil-heated calenders passed between a hot smooth calender (2l) and a hot embossing calender (2k), calendered with temperature and pressure, fixed through thermal bonding points, and forming the carded thermobond non-woven (2m) layer, with the temperature value ranging from 35-500 C⁰, a temperature difference between the calenders of ± 20 C⁰ and the thermal bonding area of the embossing calender (2k) being in the range of 5-40%.

## Patentansprüche

1. Verfahren zur Herstellung eines Vliesstoffs, der zur Verwendung als Filterschicht geeignet ist, **dadurch gekennzeichnet, dass** ein Fasergemisch durch die folgenden Stufen geleitet wird:
Faseröffnungsstufe (100), Faserzuführungsstufe (110), Kardierstufe (120)
und
Bindungsstufe (130), wobei in der Bindungsstufe (130) die aus der Kardierstufe (120) stammende kardierte Bahn (2j) zwischen innen ölbeheizten Kalandern gefördert wird, die zwischen einem heißen Glattkalander (2l) und einem heißen Prägekalander (2k) hindurchgeführt werden, mit Temperatur und Druck kalandriert wird, durch thermische Bindungspunkte fixiert wird und die kardierte Thermobond-Vliesschicht (2m) bildet, wobei der Temperaturwert im Bereich von 35-500 C° liegt, eine Temperaturdifferenz zwischen den Kalandern ± 20 C° beträgt und der thermische Bindungsbereich des Prägekalanders (2k) im Bereich von 5-40% liegt.

## Revendications

1. Méthode de production d'un matériau non tissé approprié pour être utilisé comme couche de filtration, **caractérisée par** le passage d'un mélange de fibres à travers les étapes suivantes :
l'étape d'ouverture des fibres (100), l'étape d'alimentation des fibres (110), l'étape de cardage (120)
et
l'étape de liaison (130), dans laquelle, à l'étape de liaison (130), la bande cardée (2j) obtenue à l'étape de cardage (120) est envoyée entre des calandres chauffées à l'huile intérieurement, passées entre une calandre lisse chaude (2l) et une calandre de gaufrage chaude (2k), calandrée avec une température et une pression, fixé par des points de liaison thermique et formant la couche de non-tissé thermolié cardé (2m), avec une valeur de température comprise entre 35-500 C°, une différence de température entre les calandres de ± 20 C° et une zone de liaison thermique de la calandre de gaufrage (2k) de l'ordre de 5-40%.
